# EUROPÄISCHE PATENTSCHRIFT

(11) **EP 3 966 475 B1**
(45) Veröffentlichungstag und Bekanntmachung des Hinweises auf die Patenterteilung: **06.08.2025**
(21) Anmeldenummer: 20722998.0
(22) Anmeldetag: 22.04.2020
(51) Int. Cl.: F16H 57/031, F16H 57/021

(54) **GETRIEBE MIT EINEM GEHÄUSETEIL, EINEM ERSTEN DECKELTEIL UND EINEM ZWEITEN DECKELTEIL**
TRANSMISSION COMPRISING A HOUSING PART, A FIRST COVER PART AND A SECOND COVER PART
TRANSMISSION DOTÉE D'UN ÉLÉMENT CARTER, D'UN PREMIER ÉLÉMENT COUVERCLE ET D'UN SECOND ÉLÉMENT COUVERCLE

(30) Priorität: 06.05.2019 DE 102019003165
(43) Veröffentlichungstag der Anmeldung: 16.03.2022
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE); BÜHN, Oliver, 76703 Kraichtal (DE)
(86) Internationale Anmeldenummer: PCT/EP2020/025183
(87) Internationale Veröffentlichungsnummer: WO 2020/224798

(56) Entgegenhaltungen:
- CN-U- 202 195 000
- CN-U- 202 195 000
- CN-U- 204 729 551
- CN-U- 204 729 551
- KR-B1- 101 933 118
- KR-B1- 101 933 118

## Beschreibung

Die Erfindung betrifft ein Getriebe mit einem Gehäuseteil, einem ersten Deckelteil und einem zweiten Deckelteil.

Es ist allgemein bekannt, dass ein Getriebe ein Gehäuseteil aufweist, in welchem Lager aufgenommen sind.

Aus der KR 101 933 118 B1 ist als nächstliegender Stand der Technik ein Getriebe mit einem Gehäuseteil bekannt, welches die Merkmale des Oberbegriffs des Anspruchs 1 zeigt.

Aus der CN 204 729 551 U ist ein Kegelgetriebe bekannt.

Aus der CN 202 195 000 U ist ein Schneckengetriebe bekannt.

Der Erfindung liegt daher die Aufgabe zugrunde, ein Getriebe sicher zu betreiben.

Erfindungsgemäß wird die Aufgabe bei dem Getriebe nach den in Anspruch 1 angegebenen Merkmalen gelöst.

Von Vorteil ist dabei, dass durch die Ringwand das Getriebe eine Doppelwand aufweist und somit der Innenraum verkleinert ist. Daher ist auch weniger Schmierstoff im Innenraum vorhanden. Bei Temperaturhüben ist somit auch eine geringere Druckveränderung bewirkbar, wodurch die Dichtungen weniger belastet und somit die Dichtigkeit, also auch Schutzart, verbessert gewährleistbar ist. Als Schmierstoff ist vorzugsweise Fett verwendbar oder alternativ Getriebeöl.

Durch die Verwendung von baugleichen Deckelteilen sind die Fertigungskosten verringerbar. Von Vorteil ist außerdem, dass in dem radialen Zwischenbereich zwischen der Außenwand und dem ersten und/oder zweiten Wandbereich ein Füllmaterial oder Luft anordenbar ist, welches vorzugsweise getrennt ist vom zumindest teilweise mit Schmierstoff befüllten Innenraum des Getriebes. Auf diese Weise ist bei Temperaturveränderungen im Betrieb eine Verringerung der zugehörigen Druckveränderungen bewirkbar und dadurch wiederum eine verbesserte Dichtigkeit, da die Dichtungen den geringeren Druckunterschieden zwischen Innenraum und Umgebung ausgesetzt sind. Von Vorteil ist außerdem, dass die eintreibende Welle genügend Raum zur Verfügung gestellt bekommt und trotzdem das zumindest teilweise mit Schmierstoff befüllte Innenvolumen reduzierbar ist. Von Vorteil ist außerdem, dass die Lager in den Deckelteilen, insbesondere an den ersten Ringbereichen der beiden baugleich zueinander ausgeführten Deckelteilen aufnehmbar sind. Dabei ist eine Abstützung durch das Gehäuseteil auf der radialen Außenseite des ersten Ringbereichs ausführbar. Von Vorteil ist außerdem, dass der Übergangsbereich eine Stabilisierung der Doppelwand bewirkt. Durch Verwendung eines glatten Verlaufs der Ringwand sind Kerbwirkungen verringert und somit eine hohe Belastbarkeit erreichbar. Insbesondere wird der Dichtring bei auftretenden Belastungen, wie Querkräften oder dergleichen, stabil aufgenommen und die Dichtigkeit daher nicht gefährdet. Von Vorteil ist außerdem, dass die eintreibende Welle genügend Raumbereich und somit auch Schmierstoff zur Verfügung gestellt bekommt, jedoch eine möglichst große Reduzierung des Innenvolumens des Getriebes erreichbar ist.

Bei einer vorteilhaften Ausgestaltung ist der Zwischenbereich zwischen der Außenwand und dem ersten Wandbereich axial durch das Gehäuseteil durchgehend ausgeführt. Von Vorteil ist dabei, dass auch im axial vom Verzahnungsteil überdeckten Bereich eine Reduzierung des

Innenvolumens erreichbar ist und durch die somit axial lang gezogene Doppelwand eine hohe Steifigkeit erreichbar ist.

Bei einer vorteilhaften Ausgestaltung ist der Zwischenbereich zwischen der Außenwand und dem zweiten Wandbereich axial durch das Gehäuseteil durchgehend ausgeführt. Von Vorteil ist dabei, dass auch im axial vom Verzahnungsteil überdeckten Bereich eine Reduzierung des Innenvolumens erreichbar ist und durch die somit axial lang gezogene Doppelwand eine hohe Steifigkeit erreichbar ist.

Bei einer vorteilhaften Ausgestaltung besteht der Zwischenbereich zwischen der Außenwand und dem ersten Wandbereich aus Luft oder einem Füllmaterial. Von Vorteil ist dabei, dass bei Verwendung von Luft der Zwischenbereich separierbar vom Innenvolumen ist. Bei Verwendung von Füllmaterial ist vorteiligerweise der Zwischenbereich als Speicher für Schmierstoff nutzbar und dieser während des Betriebs den Schmierstellen zuführbar. Insbesondere ist ein elektrisch steuerbares Heizelement in dem Zwischenraumbereich anbringbar, so dass bei abgekühltem Getriebe der Zwischenbereich schnell aufheizbar ist und durch die so bewirkte Erhöhung des Druckunterschieds zum Innenvolumen des Getriebes, also zum die Verzahnungen umfassenden Raumbereich des Getriebes, hin Schmierstoff zu den Schmierstellen förderbar, vorzugsweise durch Ausnehmungen, die vom Zwischenbereich zum Innenvolumen führen.

Bei einer vorteilhaften Ausgestaltung besteht der Zwischenbereich zwischen der Außenwand und dem zweiten Wandbereich aus Luft oder einem Füllmaterial. Von Vorteil ist dabei, dass bei Verwendung von Luft der Zwischenbereich separierbar vom Innenvolumen ist. Bei Verwendung von Füllmaterial ist vorteiligerweise der Zwischenbereich als Speicher für Schmierstoff nutzbar und dieser während des Betriebs den Schmierstellen zuführbar. Insbesondere ist ein elektrisch steuerbares Heizelement in dem Zwischenraumbereich anbringbar, so dass bei abgekühltem Getriebe der Zwischenbereich schnell aufheizbar ist und durch die so bewirkte Erhöhung des Druckunterschieds zum Innenvolumen des Getriebes, also zum die Verzahnungen umfassenden Raumbereich des Getriebes, hin Schmierstoff zu den Schmierstellen förderbar, vorzugsweise durch Ausnehmungen, die vom Zwischenbereich zum Innenvolumen führen.

Bei einer vorteilhaften Ausgestaltung enthält das Füllmaterial einen Schmierstoff, welcher an Schmierstellen, insbesondere Lager oder Eingriffsbereich von Verzahnungen, des Getriebes hinleitbar ist. Von Vorteil ist dabei, dass die Reibung verringerbar und die Standzeit des Getriebes erhöhbar ist, insbesondere auch durch Verringerung von reibungsbedingter Verlustwärme.

Erfindungsgemäß ist der erste Wandbereich an seinem dem auf der Welle drehfest verbundenen Verzahnungsteil zugewandten axialen Endbereich über einen Verbindungswandbereich mit der Außenwand verbunden, wobei der Verbindungswandbereich sich radial erstreckt, und/oder wobei der in axialer Richtung vom ersten Wandbereich überdeckte Bereich beabstandet ist von dem vom Verzahnungsteil in axialer Richtung überdeckten Bereich. Von Vorteil ist dabei, dass genügend Raumbereich für das Verzahnungsteil vorhanden ist. Somit ist ein derart großes Verzahnungsteil einsetzbar, dass zwischen Verzahnungsteil und Umgebung nur noch die Außenwand anordenbar ist. Trotzdem ist die Schmierstoffmenge reduziert, da das Innenvolumen verringert ist.

Bei einer vorteilhaften Ausgestaltung überlappt der in axialer Richtung vom ersten Wandbereich überdeckte Bereich mit dem von der eintreibenden Welle in axialer Richtung überdeckten Bereich. Von Vorteil ist dabei, dass der erste Wandbereich nicht den Raumbereich der eintreibenden Welle beansprucht. Somit ist das Innenvolumen mittels des ersten Wandbereichs reduzierbar, aber die eintreibende Welle ungestört betreibbar.

Bei einer vorteilhaften Ausgestaltung ist die eintreibende Welle in axialer Richtung beabstandet vom zweiten Wandbereich. Von Vorteil ist dabei, dass im von der eintreibenden Welle beanspruchten Bereich der zweite Wandbereich beabstandet ist.

Bei einer vorteilhaften Ausgestaltung ist das erste Deckelteil identisch und/oder baugleich zum zweiten Deckelteil ausgeführt. Von Vorteil ist dabei, dass eine geringe Anzahl von Teilen notwendig ist. Am ersten Ringbereich ist stets ein Lager aufnehmbar. Wahlweise ist aber an der radialen Außenseite des ersten Ringbereichs eine Abstützung durch das Gehäuseteil und ein erster Dichtring anordenbar oder alternativ an dem zweiten vom ersten beabstandeten Ringbereich des Deckelteils ein zweiter Dichtring vorsehbar, so dass eine Entkopplung der Lagerung und der Dichtung ausführbar ist.

Bei einer vorteilhaften Ausgestaltung umfasst der von der eintreibenden Welle überdeckte Radialabstandsbereich den vom ersten Wandbereich überdeckten Radialabstandsbereich. Von Vorteil ist dabei, dass der Wandbereich im gleichen radialen Bereich angeordnet ist und trotzdem genügend Raumbereich für die eintreibende Welle vorhanden ist.

Bei einer vorteilhaften Ausgestaltung umfasst der von der eintreibenden Welle überdeckte Radialabstandsbereich den vom zweiten Wandbereich überdeckten Radialabstandsbereich. Von Vorteil ist dabei, dass der Wandbereich im gleichen radialen Bereich angeordnet ist und trotzdem genügend Raumbereich für die eintreibende Welle vorhanden ist.

Bei einer vorteilhaften Ausgestaltung ist das zweite Lager vom ersten Ringbereich des zweiten Deckelteils aufgenommen, insbesondere an dessen radialer Innenseite. Von Vorteil ist dabei, dass die Lagerung entkoppelt ist von dem an dem zweiten Ringbereich des zweiten Deckelteils angeordneten zweiten Dichtring.

Bei einer vorteilhaften Ausgestaltung ist das Verzahnungsteil näher am zweiten Lager als am ersten Lager angeordnet. Von Vorteil ist dabei, dass eingeleitete Querkraft vom ersten Ringbereich aufnehmbar sind und der zweite Dichtring separiert ist von Auslenkungen des ersten Lagers.

Bei einer vorteilhaften Ausgestaltung ist das Verzahnungsteil mit einer Verzahnung einer eintreibenden Welle oder mit einer Verzahnung eines mit der eintreibenden Welle verbundenen Teils im Eingriff,
wobei die Drehachse der eintreibenden Welle senkrecht zur Drehachse des Verzahnungsteils ausgerichtet ist, insbesondere wobei die Drehachse des Verzahnungsteils von der Drehachse der eintreibenden Welle beabstandet ist. Von Vorteil ist dabei, dass die Erfindung bei einer Winkelgetriebestufe eines Getriebes anwendbar ist.

Weitere Vorteile ergeben sich aus den Unteransprüchen.

Die Erfindung wird nun anhand von schematischen Abbildungen näher erläutert:
In der Figur 1 ist ein Querschnitt durch ein Deckelteil 1 eines erfindungsgemäßen Getriebes dargestellt.
In der Figur 2 ist ein Querschnitt durch ein Gehäuseteil 20 des erfindungsgemäßen Getriebes dargestellt.
In der Figur 3 ist eine Draufsicht auf ein Gehäuseteil 20 des erfindungsgemäßen Getriebes dargestellt.
In der Figur 4 ist ein Querschnitt durch das erfindungsgemäße Getriebe dargestellt.
In der Figur 5 ist eine Draufsicht auf das erfindungsgemäße Getriebe dargestellt.
In der Figur 6 ist ein Gehäuseteil 20 eines ähnlichen Getriebes in Schrägansicht gezeigt, wobei hier ein S-förmiger Übergangsbereich 24 statt eines stufenförmigen Übergangsbereichs bei einer durch Wandbereiche 25, 26 gebildeten Doppelwand ausgeführt ist.
In der Figur 7 ist dieses Gehäuseteil 20 aus einer anderen Blickrichtung dargestellt.
In der Figur 8 ist ein Längsschnitt durch das zu Figur 6 und Figur 7 zugehörige Getriebe dargestellt.
In der Figur 9 ist eine zu Figur 8 gehörige Seitenansicht gezeigt, welche die Schnittfläche der Figur 8 charakterisiert.
In der Figur 10 ist ein zu den Figuren 8 und 9 gehöriger Querschnitt gezeigt.
In der Figur 11 ist eine zu Figur 10 gehörige Seitenansicht gezeigt, welche die Schnittfläche der Figur 10 charakterisiert.

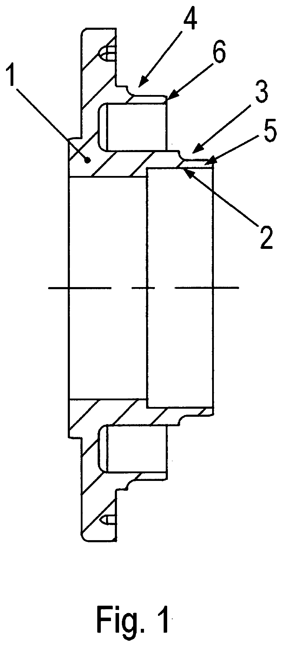

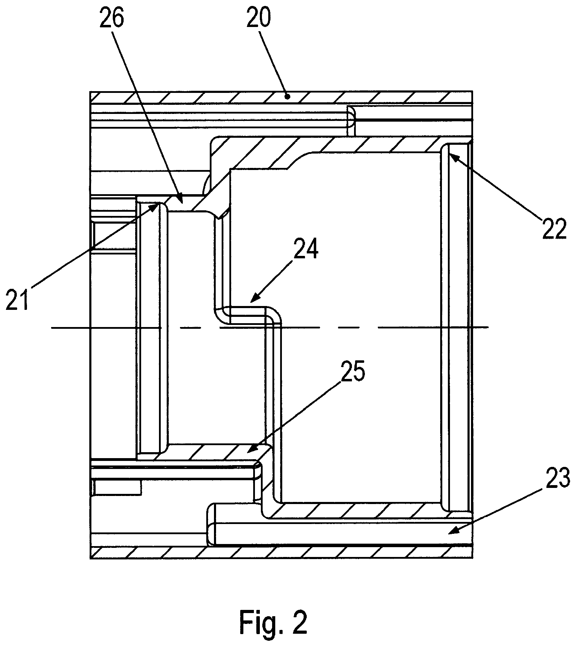

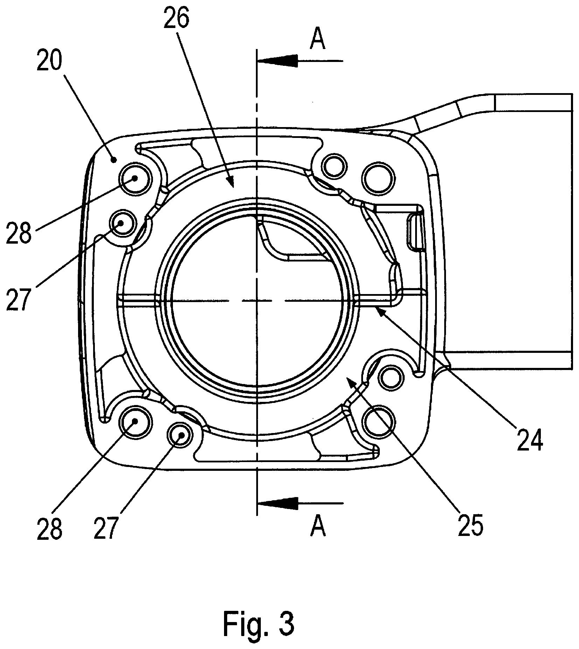

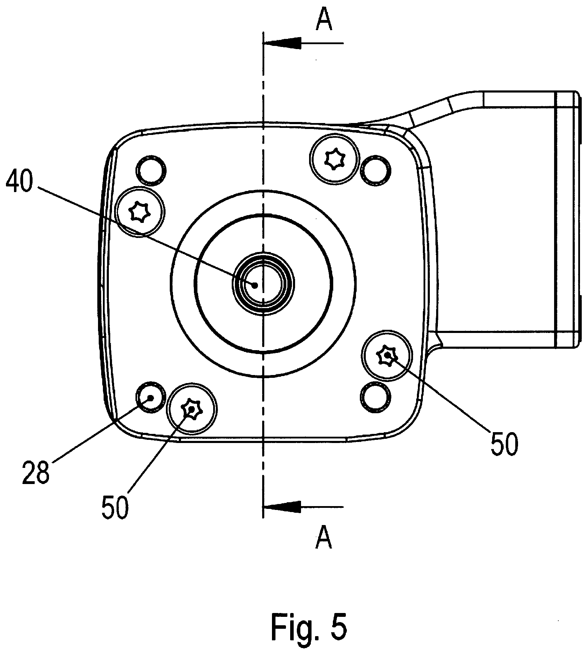

Wie in den Figuren 1 bis 5 dargestellt, weist das Getriebe ein Gehäuseteil 20 auf, welches zwischen zwei identisch zueinander ausgeführten Deckelteilen 1 angeordnet ist.

Das erste der beiden Deckelteile 1 nimmt ein erstes Lager 41 einer abtreibenden Welle 40 auf.

Das zweite der beiden Deckelteile 1 nimmt ein zweites Lager 46 der abtreibenden Welle 40 auf.

Somit ist die abtreibende Welle 40 mittels der beiden Lager (41, 46) drehbar gelagert und ragt durch das erste Deckelteil 1 hindurch.

In axialer Richtung, also in Richtung der Drehachse der abtreibenden Welle 40, ist neben dem ersten Lager 41 ein Wellendichtring 42 im ersten Deckelteil 1 aufgenommen, welcher zur abtreibenden Welle 40 hin abdichtet.

Am ersten Deckelteil 1 ist ein erster Ringbereich 5, insbesondere ein ringartiger Vorsprung, ausgeformt, welcher in den Getriebeinnenraum hineinragt und an seiner radialen Innenseite einen Sitz 2 für das erste Lager 41 aufweist sowie an seiner radialen Außenseite einen Sitz 3 für einen ersten Dichtring 43. Radial beabstandet vom ersten Ringbereich 5 ist am ersten Deckelteil 1 ein weiterer Ringbereich 6, welcher an seiner radialen Außenseite ebenfalls einen Sitz 4 für einen weiteren Dichtring aufweist. Dieser Sitz 4 ist beim ersten Deckelteil 1 aber nicht beansprucht, also nicht verwendet, wohl aber beim zweiten Deckelteil 1, welches an der radialen Innenseite seines ersten Ringbereichs 5 das zweite Lager 46 aufweist und an der radial äußeren Seite den Sitz 4, an dem ein zweiter Dichtring 44 anliegt.

Dieser zweite Dichtring 44 ist zwischen einem am Gehäuseteil 20 ausgeformten Sitz 22 und dem Sitz 4 des zweiten Deckelteil 1 angeordnet.

Beide Sitze (4, 22) sind nach der Herstellung der beiden Teile, insbesondere also des Gehäuseteils 20 und des Deckelteils 1, nicht bearbeitet. Somit liegt der Dichtring 44 an entsprechend rauer Oberfläche an.

Der zweite Ringbereich des zweiten Deckelteils 1 ist in eine zylinderförmige Aufnahme des Gehäuseteils 20 in axialer Richtung eingeführt, wodurch der zweite Dichtring 44 in radialer

Richtung zwischen den Sitzen 4 und 22 elastisch zusammengedrückt wird und sich daher in axialer Richtung sowie entgegen der axialen Richtung ausdehnt.

An den Sitz 4 ist ein gerundeter Bereich des Deckelteils 1 angeschlossen. Entsprechend symmetrisch ist ein weiterer gerundeter Bereich an den Sitz 22 ein gerundeter Bereich angeschlossen.

Der zwischen den Sitzen 4 und 22 samt den angeschlossenen gerundeten Bereichen gebildete, schlauchartige Raumbereich, zwischen den Sitzen 4 und 22 ist daher axial weiter ausgedehnt als entgegen der axialen Richtung.

Der erste Ringbereich 5 des ersten Deckelteils 1 ist in eine zylindrische Aufnahme eingeführt, welche auf kleinerem Radialabstand als die für den zweiten Ringbereich des zweiten Deckelteils vorgesehene Aufnahme angeordnet ist.

An den an der radial gesehen äußeren Seite des ersten Ringbereichs ausgeformten als Zylindermantelflächenabschnitt ausgeformten Sitz 3 des ersten Deckelteils 1, ist ein gerundeter Bereich des ersten Ringbereichs 5 angeschlossen. Am Gehäuseteil 20 ist an den als zylindrischen Innenmantelflächenabschnitt ausgeformten Sitz 21 ein gerundeter Bereich angeschlossen, so dass der erste Dichtring ebenfalls in einem schlauchförmigen Raumbereich angeordnet ist, welcher durch die beiden zylindrischen Sitze 3 und 21 sowie die beiden jeweils axial angeschlossenen gerundeten Bereiche begrenzt ist.

Die Aufnahme des ersten Ringbereichs 5 im Gehäuseteil 20 ist durch einen ringähnlichen, axial gerichteten Vorsprung des Gehäuseteils 20 gebildet.

Dabei weist dieser Vorsprung in einem ersten, auf die Drehachse der abtreibenden Welle 40 bezogenen Umfangswinkelbereich einen ersten Wandbereich 25 auf und in einem von dem ersten Umfangswinkelbereich in Umfangsrichtung beabstandeten zweiten Umfangswinkelbereich einen zweiten Wandbereich 26 auf.

In einem in Umfangsrichtung zwischen dem ersten und dem zweiten angeordneten Umfangswinkelbereich ist ein stufenförmiger Übergangsbereich 24 vom ersten zum zweiten Wandbereich ausgeformt.

Denn der erste Wandbereich 25 erstreckt sich vom axialen Ende des Vorsprungs des Gehäuseteils 20 in axialer Richtung weiter als der zweite Wandbereich 26.

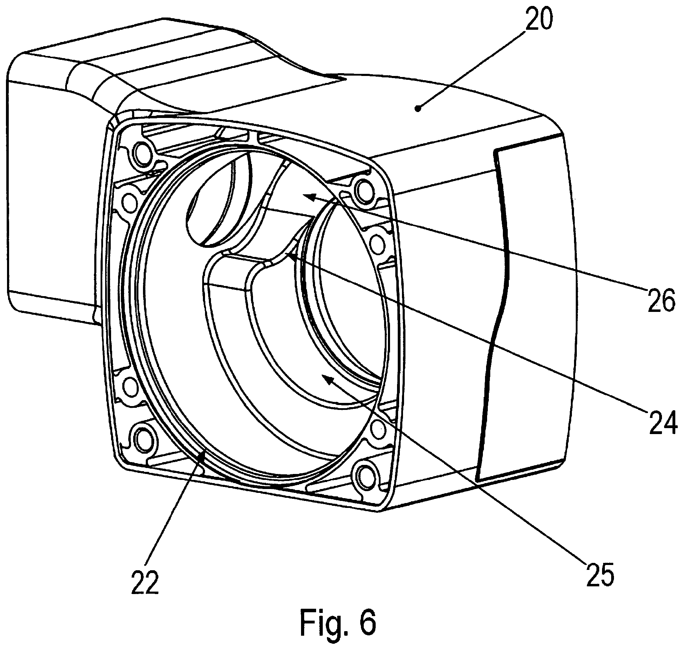

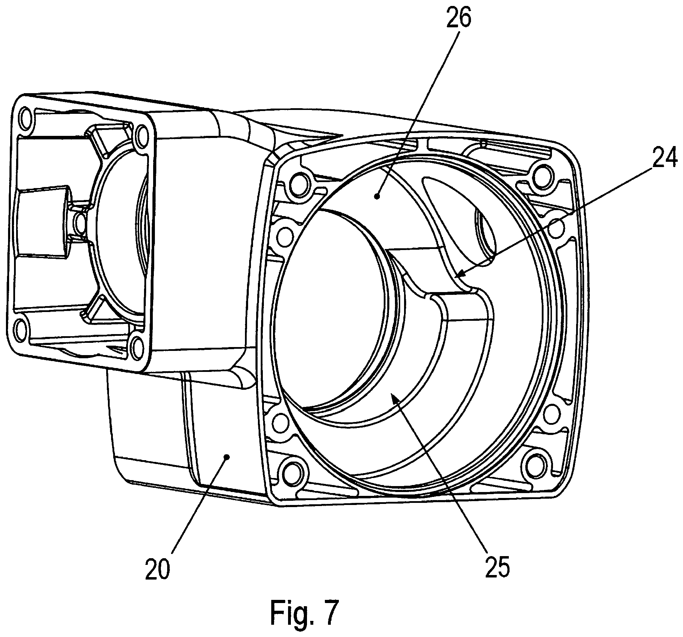

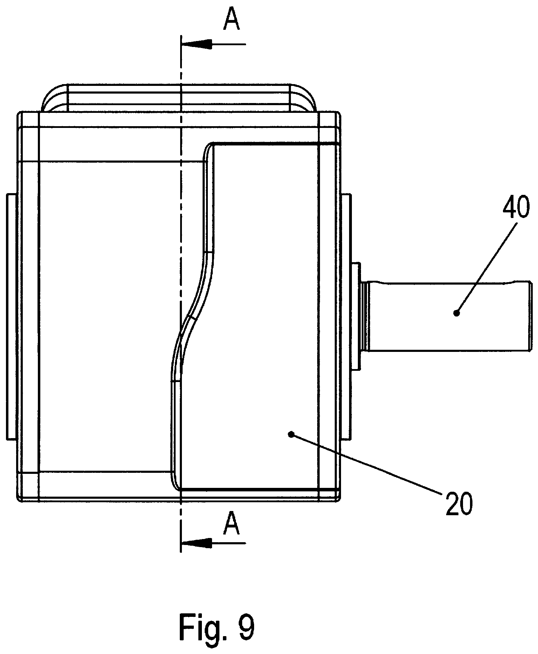

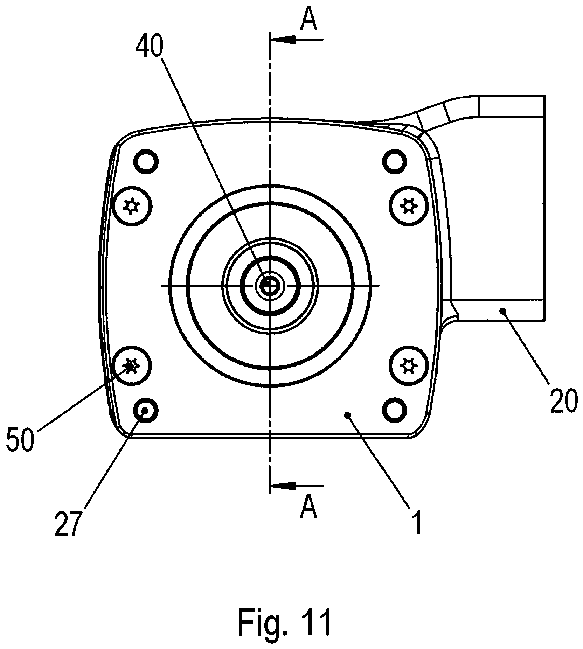

Das Ausführungsbeispiel nach den Figuren 6 bis 11 unterscheidet sich in der Form des Übergangsbereichs 24, welcher hierbei nicht stufenartig, sondern glatt, insbesondere S-förmig, ausgeführt ist. Die axiale Ausdehnung der durch die Wandbereiche 25 und 26 gebildeten Doppelwand geht also von einem ersten wert zu einem zweiten Wert glatt, insbesondere stetig differenzierbar, insbesondere S-förmig, über.

Die vorzugsweise S-förmige Ausgestaltung reduziert Kerbwirkung, bewirkt eine einfachere Herstellung durch Gießen und einen homogeneren Materialverlauf.

Die radiale Breite der Doppelwand, also der aus den Wandbereichen 25 und 26 sowie dem Übergangsbereich 24 gebildeten Doppelwand, ist vorzugsweise konstant.

Die axiale Ausdehnung im ersten Wandbereich 25 ist konstant, insbesondere also unabhängig vom ersten Umfangswinkelbereich.

Die axiale Ausdehnung im zweiten Wandbereich 26 ist konstant, insbesondere also unabhängig vom zweiten Umfangswinkelbereich.

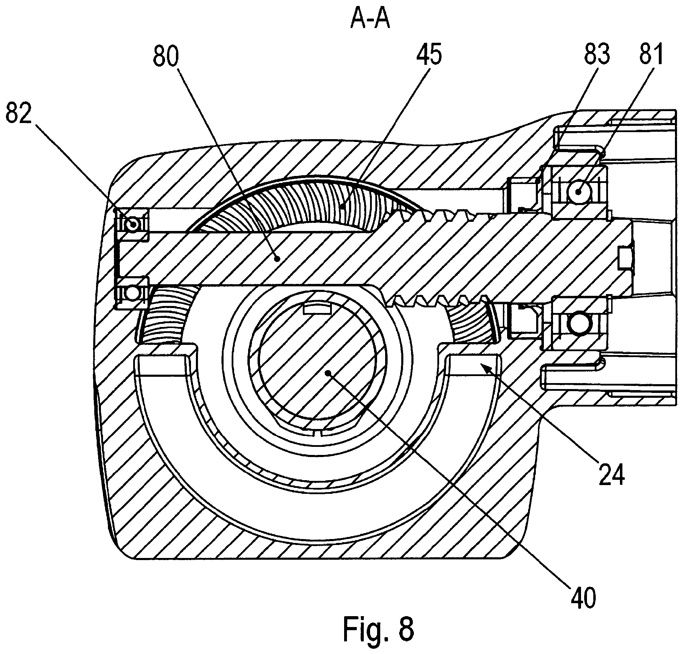

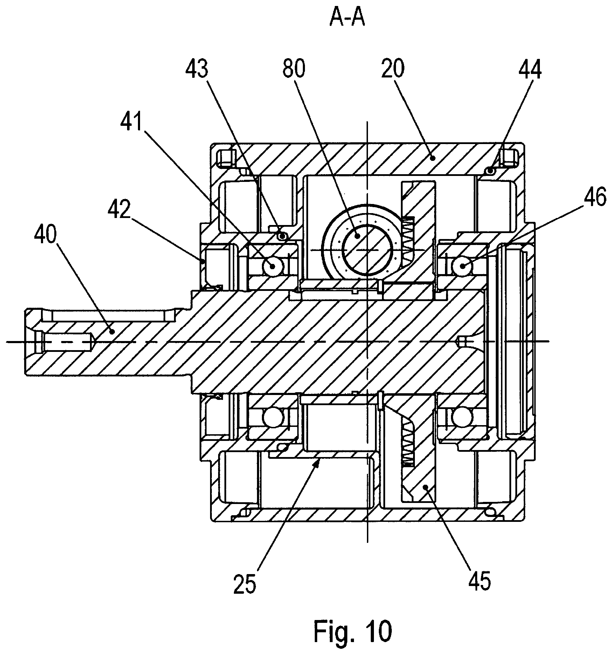

Wie in Figur 8 und 10 erkennbar, ist die Doppelwand durch diese spezielle Ausformung einerseits zur Verminderung von Getriebeöl vorgesehen und gibt andererseits auch genügend Raum frei für die eintreibende Welle 80.

Denn der von der eintreibenden Welle 80 in axialer Richtung, also in Richtung der Drehachse der abtreibenden Welle 40, überdeckte Bereich überlappt mit dem von dem ersten Wandbereich 25 in axialer Richtung überdeckten Bereich, ist aber beabstandet von dem vom zweiten Wandbereich 26 in axialer Richtung überdeckten Bereich.

Der erste Wandbereich 25 ist radial beabstandet von der Außenwand des Gehäuseteils 20. In dem Zwischenbereich zwischen der Außenwand und dem ersten Wandbereich 25 befindet sich ein Füllmaterial, insbesondere Luft.

Der Zwischenbereich ist zur abtreibenden Seite hin am Gehäuseteil 20 offen ausgeformt und somit nur durch das erste Deckelteil 1 abgedeckt.

Wie in Figur 10 gezeigt, endet der Zwischenbereich axial beabstandet und somit vor dem vom Verzahnungsteil 45 in axialer Richtung überdeckten Bereich. Daher begrenzt ein Verbindungswandbereich den Zwischenbereich, wobei der Verbindungswandbereich radial innen mit dem ersten Wandbereich25 und radial außen mit der Außenwand verbunden ist.

Im Unterschied dazu ist bei der Ausführung nach den Figuren 1 bis 5 der Zwischenbereich axial durchgehend durch das Gehäuseteil 20 ausgeführt.

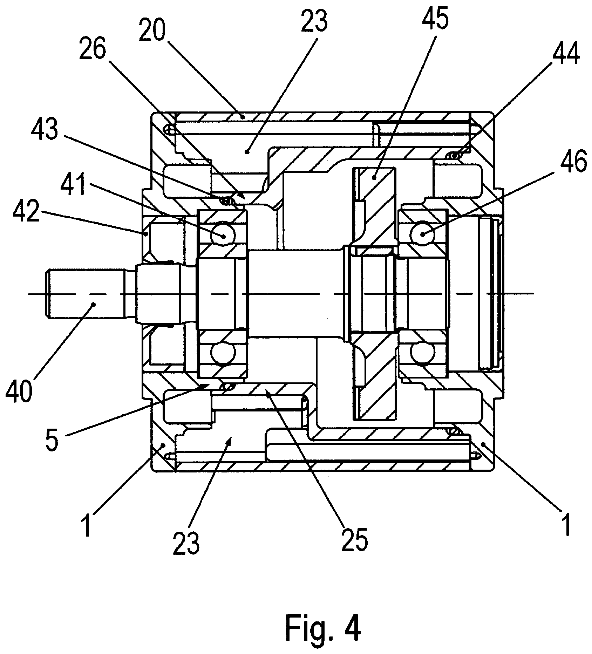

Da das Verzahnungsteil nach Figur 4 radial weniger ausgedehnt ist als bei Figur 10, ist der Zwischenbereich axial durch das Gehäuseteil 20 durchgehend ausgeführt. Dabei umfasst also der vom Zwischenbereich23 in axialer Richtung überdeckte Bereich den vom Verzahnungsteil 45 in axialer Richtung überdeckten Bereich.

Der erste Wandbereich 25 erstreckt sich auf konstantem Radialabstand bis zu einem Verbindungswandbereich, welcher sich radial erstreckt bis zu einem weiteren, auf konstantem Radialabstand axial sich erstreckenden Wandbereich, welcher ebenfalls noch von der Außenwand radial beabstandet ist, aber weniger als der erste Wandbereich 25. Der Zwischenbereich ist also axial beidseitig durch ein jeweiliges Deckelteil 1 abgedeckt.

Der zweite Wandbereich 26 erstreckt sich auf konstantem Radialabstand bis zu einem Verbindungswandbereich, welcher sich radial erstreckt bis zu einem weiteren, auf konstantem Radialabstand axial sich erstreckenden Wandbereich, welcher ebenfalls noch von der Außenwand radial beabstandet ist, aber weniger als der zweite Wandbereich 26, und an einer oder mehreren Umfangsstellen von einem Stegbereich gehalten ist, welcher sowohl mit der Außenwand als auch diesem weiteren, auf konstantem Radialabstand axial sich erstreckenden Wandbereich verbunden ist. Der Zwischenbereich zwischen der Außenwand und dem zweiten Wandbereich 26 ist also ebenfalls axial durchgehend ausgeformt und somit axial beidseitig durch das jeweilige Deckelteil 1 abgedeckt.

Vorteiligerweise ist also der erste Ringbereich 5 des ersten Deckelteils 1 in den ersten Wandbereich 26 aufgenommen und somit abgestützt, so dass das erste Lager 41 sowie der erste Dichtring 43 stabil gehalten sind, insbesondere bei durch die im Eingriff stehenden Verzahnungen oder durch die Last eingeleiteten Querkräfte.

Das Verzahnungsteil ist näher zum zweiten Lager 46 angeordnet als zum ersten Lager 41. Außerdem ist das zweite Lager 41 im ersten Ringbereich 5 des zweiten Deckelteils 1 aufgenommen, wobei hier keine Abstützung durch das Gehäuseteil 20 erfolgt.

Bei weiteren erfindungsgemäßen Ausführungsbeispielen wird im Zwischenbereich ein Füllmaterial angeordnet, das einen Schmierstoff speichert und zum Getriebeinnenraum während der Standzeit abgibt. Hierzu weist der erste und/oder zweite Wandbereich (25, 26) oder der Verbindungswandbereich durchgehende Ausnehmungen auf. Auf diese Weise ist bei der Montage nur eine sehr geringe Menge an Schmierstoff für den Getriebeinnenraum notwendig, da während des Betriebs aus dem Zwischenraum Schmierstoff zugeführt wird, insbesondere an die zu schmierenden Stellen, wie Lager und im Eingriff stehende Verzahnungen. Durch Temperaturhübe, die zwischen Stillstandzeiten und Betriebszeiten auftreten, wird die Abgabe von Schmierstoff in den Getriebeinnenraum befördert.

### Bezugszeichenliste

1 Deckelteil
2 Sitz für erstes Lager 41
3 Sitz für Dichtring
4 Sitz für Dichtring
5 erster Ringbereich
6 zweiter Ringbereich
20 Gehäuseteil
21 Sitz für Dichtring
22 Sitz für Dichtring
23 axial durchgehende Ausnehmung
24 Übergangsbereich, insbesondere Stufe oder glatter Übergangsbereich
25 erster Wandbereich
26 zweiter Wandbereich
27 Gewindebohrung für Verbindungsschraube
28 Gewindebohrung zum Verbinden einer anzutreibenden Vorrichtung
40 abtreibende Welle
41 erstes Lager
42 Wellendichtring
43 erster Dichtring
44 zweiter Dichtring
45 Verzahnungsteil
46 zweites Lager
50 Verbindungsschraube

## Patentansprüche

1. Getriebe mit einem Gehäuseteil (20), einem ersten Deckelteil (1) und einem zweiten Deckelteil,
wobei eine Welle (40) über ein erstes und ein zweites Lager (41, 46) drehbar gelagert ist, insbesondere wobei ein Verzahnungsteil (45) mit der Welle (40) drehfest verbunden ist,
wobei das erste Lager (41) in einem ersten Ringbereich (5) des ersten Deckelteils, insbesondere an der radialen Innenseite eines ersten Ringbereichs (5) des ersten Deckelteils, aufgenommen ist,
wobei der erste Ringbereich (5) in einer in eine Ringwand des Gehäuseteils (20) eingebrachte Ausnehmung (23) eingesteckt und/oder aufgenommen ist,
wobei die Ringwand einen ersten Wandbereich (25), einen zweiten Wandbereich (26) und einen Übergangsbereich (24) aufweist,
wobei der erste Wandbereich (25) in einem ersten Umfangswinkelbereich angeordnet ist,
wobei der zweite Wandbereich (26) in einem zweiten Umfangswinkelbereich angeordnet ist,
welcher vom ersten Umfangswinkelbereich beabstandet ist,
wobei der Übergangsbereich (24) die beiden Wandbereiche (25, 26) verbindet, insbesondere also einen der beiden, zwischen dem ersten und dem zweiten Umfangswinkelbereich angeordneten Umfangswinkelbereiche in Umfangsrichtung überdeckt,
wobei der in axialer Richtung vom ersten Wandbereich (25) überdeckte Bereich den in axialer Richtung vom zweiten Wandbereich (26) überdeckten Bereich umfasst,
wobei die axiale Richtung parallel ausgerichtet ist zur Richtung der Drehachse der Welle (40),
wobei der erste Wandbereich (25) radial beabstandet ist von einer Außenwand des Gehäuseteils (20) und wobei die Außenwand des Gehäuseteils (20) den ersten Wandbereich (25) radial umgibt, in dem von der Außenwand und vom ersten Wandbereich (25) gemeinsam in axialer Richtung überdeckten Bereich,
wobei der zweite Wandbereich (26) radial beabstandet ist von der Außenwand des Gehäuseteils (20) und wobei die Außenwand des Gehäuseteils (20) den zweiten Wandbereich (26) radial umgibt, in dem von der Außenwand und vom zweiten Wandbereich (26) gemeinsam in axialer Richtung überdeckten Bereich,
**dadurch gekennzeichnet, dass**
der erste Wandbereich (25) sich vom axialen Ende der Ringwand in axialer Richtung weiter erstreckt als der zweite Wandbereich (26),
wobei der erste Ringbereich (5) am ersten Deckelteil (1) in den Innenraum des Getriebes in axialer Richtung, hervorragt,
der erste Wandbereich (25) an seinem dem auf der Welle (40) drehfest verbundenen Verzahnungsteil (45) zugewandten axialen Endbereich über einen Verbindungswandbereich mit der Außenwand verbunden ist,
wobei der Verbindungswandbereich sich radial erstreckt,
wobei der in axialer Richtung vom ersten Wandbereich (25) überdeckte Bereich beabstandet ist von dem vom Verzahnungsteil (45) in axialer Richtung überdeckten Bereich,
wobei der Übergangsbereich (24) stufenförmig oder glatt, insbesondere also stetig differenzierbar, ausgeführt ist,
wobei der erste Wandbereich (25) eine vom Umfangswinkel unabhängige, insbesondere also konstante, axiale Ausdehnung aufweist und der zweite Wandbereich (26) eine vom Umfangswinkel unabhängige, insbesondere also konstante, axiale Ausdehnung aufweist,
wobei die axiale Ausdehnung des Übergangsbereichs (24) eine stufenförmige Funktion oder eine glatte Funktion des Umfangswinkels ist,
wobei der erste Wandbereich (25) sich auf konstantem Radialabstand bis zu dem Verbindungswandbereich erstreckt, welcher sich radial erstreckt bis zu einem weiteren, auf konstantem Radialabstand axial sich erstreckenden Wandbereich, welcher ebenfalls noch von der Außenwand radial beabstandet ist, aber weniger als der erste Wandbereich (25),
wobei der zweite Wandbereich (26) sich auf konstantem Radialabstand bis zu dem Verbindungswandbereich erstreckt, welcher sich radial erstreckt bis zu einem weiteren, auf konstantem Radialabstand axial sich erstreckenden Wandbereich, welcher ebenfalls noch von der Außenwand radial beabstandet ist, aber weniger als der zweite Wandbereich (26), und an einer oder mehreren Umfangsstellen von einem Stegbereich gehalten ist, welcher sowohl mit der Außenwand als auch diesem weiteren, auf konstantem Radialabstand axial sich erstreckenden Wandbereich verbunden ist.

2. Getriebe nach Anspruch 1,
**dadurch gekennzeichnet, dass**
der Zwischenbereich zwischen der Außenwand und dem ersten Wandbereich (25) axial durch das Gehäuseteil (20) durchgehend ausgeführt ist,
und/oder dass
ein Zwischenbereich zwischen der Außenwand und dem zweiten Wandbereich (26) axial durch das Gehäuseteil (20) durchgehend ausgeführt ist.

3. Getriebe nach einem der vorangegangenen Ansprüche,
**dadurch gekennzeichnet, dass**
der Zwischenbereich zwischen der Außenwand und dem ersten Wandbereich (25) aus Luft oder einem Füllmaterial besteht,
und/oder dass
der Zwischenbereich zwischen der Außenwand und dem zweiten Wandbereich (26) aus Luft oder einem Füllmaterial besteht.

4. Getriebe nach einem der vorangegangenen Ansprüche,
**dadurch gekennzeichnet, dass**
das Füllmaterial einen Schmierstoff enthält, welcher an Schmierstellen, insbesondere Lager oder Eingriffsbereich von Verzahnungen, des Getriebes hinleitbar ist.

5. Getriebe nach einem der vorangegangenen Ansprüche,
**dadurch gekennzeichnet, dass**
der in axialer Richtung vom ersten Wandbereich (25) überdeckte Bereich überlappt mit dem von einer eintreibenden Welle (40) in axialer Richtung überdeckten Bereich.

6. Getriebe nach einem der vorangegangenen Ansprüche,
**dadurch gekennzeichnet, dass**
die eintreibende Welle (40) in axialer Richtung beabstandet ist vom ersten Wandbereich (25).

7. Getriebe nach einem der vorangegangenen Ansprüche,
**dadurch gekennzeichnet, dass**
das erste Deckelteil (1) identisch und/oder baugleich zum zweiten Deckelteil ausgeführt ist.

8. Getriebe nach einem der vorangegangenen Ansprüche,
**dadurch gekennzeichnet, dass**
der von der eintreibenden Welle (40) überdeckte Radialabstandsbereich den vom ersten Wandbereich (25) überdeckten Radialabstandsbereich umfasst
und/oder dass
der von der eintreibenden Welle (40) überdeckte Radialabstandsbereich den vom zweiten Wandbereich (26) überdeckten Radialabstandsbereich umfasst.

9. Getriebe nach einem der vorangegangenen Ansprüche,
**dadurch gekennzeichnet, dass**
ein zweites Lager (46) vom ersten Ringbereich (5) des zweiten Deckelteils aufgenommen ist, insbesondere an dessen radialer Innenseite
und/oder dass
das Verzahnungsteil (45) näher am zweiten Lager (46) als am ersten Lager (41) angeordnet ist.

10. Getriebe nach einem der vorangegangenen Ansprüche,
**dadurch gekennzeichnet, dass**
das Verzahnungsteil (45) mit einer Verzahnung einer eintreibenden Welle (40) oder mit einer Verzahnung eines mit der eintreibenden Welle (40) verbundenen Teils im Eingriff ist,
wobei die Drehachse der eintreibenden Welle (40) senkrecht zur Drehachse des Verzahnungsteils (45) ausgerichtet ist, insbesondere wobei die Drehachse des Verzahnungsteils (45) von der Drehachse der eintreibenden Welle (40) beabstandet ist.

## Claims

1. Gear unit comprising a housing part (20), a first cover part (1) and a second cover part,
wherein a shaft (40) is rotatably mounted via a first and a second bearing (41, 46),
in particular wherein a toothed part (45) is connected to the shaft (40) for conjoint rotation,
wherein the first bearing (41) is accommodated in a first annular region (5) of the first cover part, in particular on the radial inner side of a first annular region (5) of the first cover part,
wherein the first annular region (5) is inserted and/or accommodated in a recess (23) formed in an annular wall of the housing part (20),
wherein the annular wall comprises a first wall region (25), a second wall region (26) and a transition region (24),
wherein the first wall region (25) is arranged in a first circumferential angle range,
wherein the second wall region (26) is arranged in a second circumferential angle range, which is spaced apart from the first circumferential angle range,
wherein the transition region (24) connects the two wall regions (25, 26), i.e. in particular covers in the circumferential direction one of the two circumferential angle ranges arranged between the first and the second circumferential angle range,
wherein the area covered by the first wall region (25) in the axial direction includes the area covered by the second wall region (26) in the axial direction,
wherein the axial direction is oriented parallel to the direction of the axis of rotation of the shaft (40),
wherein the first wall region (25) is radially spaced apart from an outer wall of the housing part (20), and wherein the outer wall of the housing part (20) radially surrounds the first wall region (25) in the area jointly covered by the outer wall and the first wall region (25) in the axial direction,
wherein the second wall region (26) is radially spaced apart from the outer wall of the housing part (20), and wherein the outer wall of the housing part (20) radially surrounds the second wall region (26) in the area jointly covered by the outer wall and the second wall region (26) in the axial direction, **characterized in that**
the first wall region (25) extends further than the second wall region (26) in the axial direction from the axial end of the annular wall,
wherein the first annular region (5) on the first cover part (1) projects into the interior of the gear unit in the axial direction,
the first wall region (25), at the axial end region thereof facing toward the toothed part (45) connected to the shaft (40) for conjoint rotation, is connected to the outer wall via a connecting wall region,
wherein the connecting wall region extends radially,
wherein the area covered by the first wall region (25) in the axial direction is spaced apart from the area covered by the toothed part (45) in the axial direction,
wherein the transition region (24) is configured to be stepped or smooth, i.e. in particular continuously differentiable,
wherein the first wall region (25) has an axial extent that is independent of the circumferential angle, i.e. in particular constant, and the second wall region (26) has an axial extent that is independent of the circumferential angle, i.e. in particular constant,
wherein the axial extent of the transition region (24) is a step function or a smooth function of the circumferential angle,
wherein the first wall region (25) extends at a constant radial spacing until the connecting wall region, which extends radially until a further wall region, which further wall region extends axially at a constant radial spacing and is also still radially spaced apart from the outer wall, but by a smaller spacing than the first wall region (25),
wherein the second wall region (26) extends at a constant radial spacing until the connecting wall region, which extends radially until a further wall region, which further wall region extends axially at a constant radial spacing and is also still radially spaced apart from the outer wall, but by a smaller spacing than the second wall region (26), and is supported at one or more points on the circumference by a web region which is connected both to the outer wall and to this further wall region extending axially at a constant radial spacing.

2. Gear unit according to claim 1,
**characterized in that**
the intermediate area between the outer wall and the first wall region (25) is configured to pass axially all the way through the housing part (20),
and/or **in that**
an intermediate area between the outer wall and the second wall region (26) is configured to pass axially all the way through the housing part (20).

3. Gear unit according to any one of the preceding claims,
**characterized in that**
the intermediate area between the outer wall and the first wall region (25) consists of air or a filling material,
and/or **in that**
the intermediate area between the outer wall and the second wall region (26) consists of air or a filling material.

4. Gear unit according to any one of the preceding claims,
**characterized in that**
the filling material contains a lubricant which can be directed to lubrication points, in particular bearings or a teeth meshing region, of the gear unit.

5. Gear unit according to any one of the preceding claims,
**characterized in that**
the area covered by the first wall region (25) in the axial direction overlaps with the area covered by an input shaft (40) in the axial direction.

6. Gear unit according to any one of the preceding claims,
**characterized in that**
the input shaft (40) is spaced apart in the axial direction from the first wall region (25).

7. Gear unit according to any one of the preceding claims,
**characterized in that**
the first cover part (1) is configured to be identical to the second cover part and/or to have the same structure as the latter.

8. Gear unit according to any one of the preceding claims,
**characterized in that**
the radial spacing area covered by the input shaft (40) includes the radial spacing area covered by the first wall region (25),
and/or **in that**
the radial spacing area covered by the input shaft (40) includes the radial spacing area covered by the second wall region (26).

9. Gear unit according to any one of the preceding claims,
**characterized in that**
a second bearing (46) is accommodated by the first annular region (5) of the second cover part, in particular on the radial inner side thereof,
and/or **in that**
the toothed part (45) is arranged closer to the second bearing (46) than to the first bearing (41).

10. Gear unit according to any one of the preceding claims,
**characterized in that**
the toothed part (45) meshes with a toothing of an input shaft (40) or with a toothing of a part connected to the input shaft (40),
wherein the axis of rotation of the input shaft (40) is oriented perpendicular to the axis of rotation of the toothed part (45), in particular wherein the axis of rotation of the toothed part (45) is spaced apart from the axis of rotation of the input shaft (40).

## Revendications

1. Transmission comprenant une partie (20) formant carter, une première partie (1) de couvercle et une seconde partie de couvercle,
un arbre (40) étant monté à rotation par l'intermédiaire de premier et second paliers (41, 46), une partie dentée (45) étant notamment reliée audit arbre (40) avec verrouillage rotatif, sachant
que le premier palier (41) est intégré dans une première région annulaire (5) de la première partie de couvercle, en particulier à la face interne radiale d'une première région annulaire (5) de ladite première partie de couvercle,
laquelle première région annulaire (5) est emboîtée et/ou logée dans un évidement (23) pratiqué dans une paroi annulaire de la partie (20) formant carter,
ladite paroi annulaire comportant une première zone de paroi (25), une seconde zone de paroi (26) et une zone de transition (24),
ladite première zone de paroi (25) étant située dans une première plage d'angles périphériques, ladite seconde zone de paroi (26) étant située dans une seconde plage d'angles périphériques distante de ladite première plage d'angles périphériques,
sachant que ladite zone de transition (24) relie les deux zones de paroi (25, 26) et recouvre donc en particulier, dans la direction du pourtour, l'une des deux plages d'angles périphériques interposées entre les première et seconde plages d'angles périphériques,
sachant que la région, couverte par la première zone de paroi (25) dans la direction axiale, inclut la région couverte par la seconde zone de paroi (26) dans ladite direction axiale,
laquelle direction axiale est orientée parallèlement à la direction de l'axe de rotation de l'arbre (40),
ladite première zone de paroi (25) se trouvant radialement à distance d'une paroi externe de la partie (20) formant carter, et ladite paroi externe de ladite partie (20) formant carter entourant radialement ladite première zone de paroi (25) dans la région conjointement couverte, dans la direction axiale, par ladite paroi externe et par ladite première zone de paroi (25),
ladite seconde zone de paroi (26) se trouvant radialement à distance de ladite paroi externe de la partie (20) formant carter, et ladite paroi externe de ladite partie (20) formant carter entourant radialement ladite seconde zone de paroi (26) dans la région conjointement couverte, dans la direction axiale, par ladite paroi externe et par ladite seconde zone de paroi (26),
**caractérisée par le fait que**
l'étendue de la première zone de paroi (25) dans la direction axiale, à partir de l'extrémité axiale de la paroi annulaire, est supérieure à celle de la seconde zone de paroi (26),
sachant que la première région annulaire (5), sur la première partie (1) de couvercle, fait saillie dans l'espace intérieur de la transmission dans la direction axiale,
la première zone de paroi (25) étant reliée à la paroi externe, par l'intermédiaire d'une zone de paroi de jonction, au niveau de sa région extrême axiale pointant vers la partie dentée (45) reliée à l'arbre (40) avec verrouillage rotatif,
laquelle zone de paroi de jonction s'étend radialement,
étant précisé que la région, couverte par la première zone de paroi (25) dans la direction axiale, se trouve à distance de la région couverte par la partie dentée (45) dans ladite direction axiale,
sachant que la zone de transition (24) est de réalisation étagée ou lisse, c'est-à-dire notamment différenciable en continu,
la première zone de paroi (25) présentant une étendue axiale indépendante de l'angle périphérique, c'est-à-dire constante en particulier, et la seconde zone de paroi (26) présentant une étendue axiale indépendante de l'angle périphérique, c'est-à-dire constante en particulier, l'étendue axiale de ladite zone de transition (24) étant une fonction échelonnée ou une fonction lisse dudit angle périphérique,
sachant que la première zone de paroi (25) s'étend avec distance radiale constante jusqu'à la zone de paroi de jonction, laquelle s'étend radialement jusqu'à une autre zone de paroi qui s'étend axialement avec distance radiale constante et qui est, elle aussi, encore distante radialement de la paroi externe, mais toutefois d'une moindre ampleur que ladite première zone de paroi (25),
sachant que la seconde zone de paroi (26) s'étend avec distance radiale constante jusqu'à la zone de paroi de jonction, laquelle s'étend radialement jusqu'à une autre zone de paroi qui s'étend axialement avec distance radiale constante et qui est, elle aussi, encore distante radialement de la paroi externe, mais toutefois d'une moindre ampleur que ladite seconde zone de paroi (26), et est retenue, au niveau d'une ou plusieurs zone(s) du pourtour, par une zone d'entretoisement qui est reliée aussi bien à ladite paroi externe, qu'à cette autre zone de paroi s'étendant axialement avec distance radiale constante.

2. Transmission selon la revendication 1,
**caractérisée par le fait que**
la région intermédiaire, entre la paroi externe et la première zone de paroi (25), est conçue pour s'étendre axialement d'un trait dans la partie (20) formant carter ;
et/ou **par le fait**
**qu'**une région intermédiaire, entre ladite paroi externe et la seconde zone de paroi (26), est conçue pour s'étendre axialement d'un trait dans ladite partie (20) formant carter.

3. Transmission selon l'une des revendications précédentes,
**caractérisée par le fait que**
la région intermédiaire, entre la paroi externe et la première zone de paroi (25), consiste en de l'air ou en un matériau de remplissage ;
et/ou **par le fait que**
la région intermédiaire, entre ladite paroi externe et la seconde zone de paroi (26), consiste en de l'air ou en un matériau de remplissage.

4. Transmission selon l'une des revendications précédentes,
**caractérisée par le fait que**
le matériau de remplissage renferme une substance lubrifiante pouvant être introduite dans des zones de lubrification, notamment dans des paliers ou dans une zone de venue en prise de dentures de ladite transmission.

5. Transmission selon l'une des revendications précédentes,
**caractérisée par le fait que**
la région, couverte par la première zone de paroi (25) dans la direction axiale, est en chevauchement avec la région couverte par un arbre d'entraînement (40) dans ladite direction axiale.

6. Transmission selon l'une des revendications précédentes,
**caractérisée par le fait que**
l'arbre d'entraînement (40) est distant de la première zone de paroi (25) dans la direction axiale.

7. Transmission selon l'une des revendications précédentes,
**caractérisée par le fait que**
la première partie (1) de couvercle est de réalisation identique à celle de la seconde partie de couvercle, et/ou offrant structurellement une similitude avec cette dernière.

8. Transmission selon l'une des revendications précédentes,
**caractérisée par le fait que**
la zone d'espacement radial, couverte par l'arbre d'entraînement (40), inclut la zone d'espacement radial couverte par la première zone de paroi (25) ;
et/ou **par le fait que**
la zone d'espacement radial, couverte par ledit arbre d'entraînement (40), inclut la zone d'espacement radial couverte par la seconde zone de paroi (26).

9. Transmission selon l'une des revendications précédentes,
**caractérisée par le fait**
**qu'**un second palier (46) est reçu par la première région annulaire (5) de la seconde partie de couvercle, en particulier à la face interne radiale de celle-ci ;
et/ou par le fait que
la partie dentée (45) est implantée plus près dudit second palier (46) que du premier palier (41).

10. Transmission selon l'une des revendications précédentes,
**caractérisée par le fait que**
la partie dentée (45) est en prise avec une denture d'un arbre d'entraînement (40) ou avec une denture d'une partie reliée audit arbre d'entraînement (40),
l'axe de rotation dudit arbre d'entraînement (40) étant orienté perpendiculairement à l'axe de rotation de ladite partie dentée (45), sachant notamment que ledit axe de rotation de ladite partie dentée (45) se trouve à distance dudit axe de rotation dudit arbre d'entraînement (40).
